# EUROPÄISCHE PATENTSCHRIFT

(11) **EP 4 290 292 B1**
(45) Veröffentlichungstag und Bekanntmachung des Hinweises auf die Patenterteilung: **08.07.2026**
(21) Anmeldenummer: 23175828.5
(22) Anmeldetag: 26.05.2023
(51) Int. Cl.: G02B 21/06, G02B 21/16, G02B 21/24, G02B 21/00

(54) **BAUKASTENSYSTEM FÜR EINE MIKROSKOPIEVORRICHTUNG, MIKROSKOPIEVORRICHTUNG UND VERFAHREN ZUM HERSTELLEN EINER MIKROSKOPIEVORRICHTUNG**
MODULAR SYSTEM FOR A MICROSCOPY DEVICE, MICROSCOPY DEVICE AND METHOD FOR PRODUCING A MICROSCOPY DEVICE
SYSTÈME MODULAIRE POUR UN DISPOSITIF DE MICROSCOPIE, DISPOSITIF DE MICROSCOPIE ET PROCÉDÉ DE FABRICATION D'UN DISPOSITIF DE MICROSCOPIE

(30) Priorität: 07.06.2022 DE 102022114257
(43) Veröffentlichungstag der Anmeldung: 13.12.2023
(73) Patentinhaber: PicoQuant Innovations GmbH, 12489 Berlin (DE)
(72) Erfinder: Cordes, Thorben, 80539 München (DE); Zijlstra, Niels, 6641 TL Beuningen (NL); Moya Munoz, Gustavo Gabriel, 80539 München (DE); Brix, Oliver, 80539 München (DE)
(74) Vertreter: Prinz & Partner mbB

(56) Entgegenhaltungen:
- EP-A1- 1 637 871
- EP-A1- 1 686 407
- EP-A1- 3 951 466
- WO-A1-2009/153007
- DE-A1- 102005 046 241
- DE-A1- 102012 017 917
- DE-U1- 202011 106 029
- SUNIL KUMAR: ""openFrame" for modular, extensible, easily maintained, open-source microscopy - FocalPlane", 23 July 2020 (2020-07-23), XP093291715, Retrieved from the Internet <URL:https://focalplane.biologists.com/2020/07/23/openframe-for-modular-extensible-easily-maintained-open-source-microscopy/> [retrieved on 20250702]

## Beschreibung

### GEBIET DER ERFINDUNG

Die Erfindung betrifft ein Baukastensystem für eine Mikroskopievorrichtung, eine Mikroskopievorrichtung zum Beobachten von in einer Probe angeregter Fluoreszenz, sowie ein Verfahren zum Herstellen einer Mikroskopievorrichtung basierend auf einem Baukastensystem.

### TECHNISCHER HINTERGRUND

Mikroskopievorrichtungen zur Fluoreszenzdetektion sind in vielen Technologiefeldern verbreitet. Beispielsweise werden Fluoreszenz-Mikroskopievorrichtungen für die Einzelmolekül- oder Einzelpartikeldetektion eingesetzt, insbesondere zur Untersuchung biologischer Prozesse wie Faltungs- und/oder Aggregationsprozesse von Proteinen.

Je nach zu untersuchender Fragestellung, benötigter räumlicher und zeitlicher Auflösung und eingesetzten bzw. verfügbaren Fluorophoren sind eine Vielzahl unterschiedlicher Fluoreszenzmikroskopiemethoden bekannt, beispielsweise Fluoreszenzkorrelationsspektroskopie (im Englischen als "fluorescence correlation spectroscopy", FCS, bezeichnet), interne Totalreflexionsfluoreszenzmikroskopie (im Englischen als "total internal reflection fluorescence microscopy", TIRFM, bezeichnet) oder Einzelmolekül-Förster-Resonanzenergietransfer (im Englischen als "single molecule fluoresence resonance energy transfer", smFRET, bezeichnet).

Nachteilig an bekannten Fluoreszenz-Mikroskopievorrichtungen, welche für die zuvor genannten Anwendungen verwendet werden, ist deren hohe Komplexität sowohl hinsichtlich ihrer Konstruktion als auch ihrer Bedienung, wodurch die Kosten derartiger bekannter Mikroskopievorrichtungen hoch sind und spezialisiertes Personal für den Aufbau und den Betrieb benötigt werden. Dieses Problem wird dadurch verstärkt, dass für die unterschiedlichen Fluoreszenzmikroskopiemethoden mehrere Mikroskopievorrichtungen vorgehalten und betrieben werden müssen.

Aus dem Artikel von Brown et al.: "Single-molecule detection on a portable 3D printed microscope" (Nature Communications, 2019, 10: 5622, https://doi.org/10.1038/s41467-019-13617-0) ist ein konfokales Mikroskop für die Fluoreszenzspektroskopie bekannt, welches ein einteiliges und mittels eines 3D Druck-Verfahrens hergestelltes Gehäuse nutzt. Im Gehäuse ist ein Laser als Anregungsquelle, eine Optik sowie eine Photodiode als Detektionselement angeordnet. Die Positionen der Komponenten des Mikroskops werden durch zugeordnete Aufnahmen im Gehäuse vorgegeben. Auf diese Weise werden die Gesamtkosten und die Komplexität beim Zusammenbau des Mikroskops verringert. Nachteilig an diesem System ist jedoch, dass durch das Gehäuse die verwendbaren Komponenten des Mikroskops fest vorgegeben sind und sich somit bereits bei der Auslegung des Gehäuses auf ein bestimmtes Mikroskopieverfahren und auf eine vorgegebene Kombination aus Anregungsquelle, Optik und Detektionselement beschränkt werden muss.

Die DE 20 2011 106 029 U1 offenbart ein Laser-Scanning-System, umfassend einen Laser-Scanner bzw. ein Laser-Scanning-Modul, der bzw. das in einer separaten mechanischen Einheit enthalten ist. Das Laser-Scanning-System wird an einen Anschlussport eines konventionellen Mikroskops angebracht, um dessen Funktionen zu erweitern. Das Laser-Scanning-System kann aus mehreren Modulen aufgebaut sein, die jeweils über eine standardisierte Schnittstelle miteinander verbunden sind. Auf diese Weise ist es zwar möglich, ein konventionelles Mikroskop flexibel für unterschiedliche Fluoreszenzmikroskopiemethoden umzurüsten, jedoch weist das Laser-Scanning-System einen hohen zusätzlichen Platzbedarf auf, der umso größer wird, je umfangreicher die durch das Laser-Scanning-System bereitgestellten Funktionen werden.

Aus der DE 10 2005 046 241 A1 ist eine Bildaufnahmeeinheit für mikroskopische Anwendungen bekannt, dessen Gehäuse aus mehreren, einzelnen, separaten Modulen gebildet ist. Die Bildaufnahmeeinheit wird an einem Halter über einem Fließband befestigt, um zu untersuchende Objekte per Fluoreszenzanalyse zu analysieren, die mittels des Fließbandes an einem Objektiv der Bildaufnahmeeinheit vorbeigeführt werden. Die von der Bildaufnahmeeinheit durchführbaren Untersuchungsmethoden sind somit bereits vor dem Anbringen am Halter festgelegt.

Die JP 2044/302441 A beschreibt ein Mikroskopiesystem, das sowohl als inverses Lichtmikroskop als auch als Fluoreszenzmikroskop nutzbar ist. Das Mikroskopiesystem verfügt über ein Basiselement mit mehreren Standfüßen, an dessen Unterseite über schwalbenschwanzförmige Verbindungselemente weitere optische Komponenten in Modulbauweise angesetzt werden können. Auf diese Weise wird zwar der Platzbedarf in der Ebene des Basiselements reduziert, jedoch erhöht sich der Platzbedarf senkrecht zu dieser Ebene, sodass keine kompakte Mikroskopievorrichtung erzielbar ist.

DE 10 2012 017 917 A1 offenbart Mikroskopmodule, die an ein externes Lichtmikroskop mit einem Mikroskopstativ angeschlossen werden können, um dessen Funktionen zu erweitern. Jedes der Mikroskopmodule verfügt über einen Optikträger, der verschiedene optische Baugruppen wie Spiegel oder Filter aufweist, und eine verstellbare Umlenkeinrichtung, mit der ein Strahlengang innerhalb des jeweiligen Mikroskopmoduls verändert werden kann, um zwischen den optischen Baugruppen zu wechseln.

Die EP 3 951 466 A1 beschreibt eine Einheit zur Konfokalmikroskopie, in der mehrere Untereinheiten auf einem Träger montiert sind, wobei jede der Untereinheiten eine Lichtquelle sowie einen Detektor aufweist. Jede Untereinheit kann Licht einer vorgegebenen Wellenlänge erzeugen, mit dem eine Probe bestrahlt wird und detektiert dadurch von der Probe erzeugtes Fluoreszenzlicht. Die Untereinheiten sind versetzt auf dem Träger montiert, wobei der Versatz in Abhängigkeit des Brechungsverhaltens des Fluoreszenzlichts festgelegt ist.

Aus der EP 1 637 871 A1 ist eine Messapparatur bekannt, die eine Lichtquelleneinheit, ein Konfokalmikroskop zum Untersuchen einer Probe und eine Detektoreinheit umfasst, die vom Konfokalmikroskop kommendes Licht detektiert.

Die WO 2009/153007 A1 beschreibt ein konfokales oder Laser-Scanning-Mikroskop, in dem Impulssignale eines Eingangskanals des Mikroskops aufgezeichnet werden, wobei jeder Periode einer Abtastfrequenz auf Impulssignale ein das betreffende Abtastergebnis repräsentierendes Bit zugeordnet wird und aufeinanderfolgende Abtastergebnis-Bits in einem Datenblock gespeichert werden.

Die EP 1 686 407 A1 zeigt eine Verbindungseinheit, mit der eine optische Faser einer Mikroskopievorrichtung mit einer Lichtquelle verbunden werden kann.

Im Artikel von S. Kumar (""openFrame" for modular, extensible, easily maintained, open-source microscopy- FocalPlane, https://focalplane.biologists.com/2020/07/23/openframe-for-modularextensibleeasily-maintained-open-source-microscopy/) ist ein Mikroskopiegrundgerüst beschrieben, in dem mehrere zylindrische Schichten übereinandergesetzt werden, um einen Fluoreszenzmikroskopaufbau mit einer gemeinsamen vertikalen optischen Achse zu erzeugen, wobei zumindest eine Autofokusschicht, eine Anregungsschicht und eine Kameraschicht vorgesehen sind. An jede der Schichten sind die jeweils zugehörigen Komponenten zum Erreichen der optischen Funktion als externe Komponenten ausgestaltet, die mit dem Mikroskopiegrundgerüst verbunden werden

Es ist Aufgabe der Erfindung, eine einfach herzustellende und kostengünstige Mikroskopievorrichtung zur Fluoreszenzdetektion bereitzustellen, die insbesondere flexibel für verschiedene Fluoreszenzmikroskopieverfahren unterschiedlichster Art einsetzbar ist.

### ZUSAMMENFASSUNG DER ERFINDUNG

Die Aufgabe wird gelöst durch ein Baukastensystem für eine Mikroskopie-vorrichtung gemäß Anspruch 1. Die Mikroskopievorrichtung umfasst ein Basismodul, ein auf das Basismodul aufgesetztes Detektionsmodul zum Detektieren einer angeregten Fluoreszenz, ein auf das Detektionsmodul aufgesetztes Anregungsmodul zum Erzeugen der Fluoreszenz in einer Probe und ein auf das Anregungsmodul aufgesetztes Probenmodul, welches dazu ausgelegt ist, die Probe aufzunehmen. Das Baukastensystem umfasst zumindest ein Basismodul sowie zumindest ein Probenmodul. Ferner umfasst das Baukastensystem mehrere Anregungsmodule, wobei die mehreren Anregungsmodule eine unterschiedliche Art und/oder Anzahl an Anregungsquellen sowie eine Anregungsoptik aufweisen. Zudem umfasst das Baukastensystem mehrere Detektionsmodule, wobei die mehreren Detektionsmodule eine unterschiedliche Art und/oder Anzahl an Detektionselementen sowie eine Detektionsoptik aufweisen. Die Detektionsmodule und die Anregungsmodule des Baukastensystems besitzen jeweils einheitliche Verbindungsschnittstellen, um jedes der Anregungsmodule mit jedem der Detektionsmodule miteinander verbinden zu können. Durch die jeweilige Kombination aus Anregungsmodul und Detektionsmodul ein Betriebsmodus der Mikroskopievorrichtung vorgegeben, wobei der Betriebsmodus angibt, welche Art bzw. Form von Fluoreszenzmikroskopie bzw. Fluoreszenzspektroskopie mittels der Mikroskopievorrichtung durchführbar ist.

Das erfindungsgemäße Baukastensystem beruht auf dem Grundgedanken, dass durch die gezielte Auswahl unter den verschiedenen Anregungs- und Detektionsmodulen des Baukastensystems die jeweils gewünschte Variante eines Fluoreszenzmikroskops auf einfache Weise realisiert werden kann. Der Aufbau der Mikroskopievorrichtung erfolgt dabei insbesondere indem auf das Basismodul sukzessive die weiteren funktionalen Module, also beispielsweise das Anregungsmodul und das Detektionsmodul, aufgesetzt werden.

Die einheitlichen Verbindungsschnittstellen der Detektionsmodule und Anregungsmodule gestatten in diesem Zusammenhang, dass das jeweils eingesetzte Detektionsmodul und/oder Anregungsmodul einfach getauscht werden kann, unabhängig von der genauen Art der weiteren Module des Baukastensystems. Dabei müssen insbesondere keine weiteren Anpassungen vorgenommen werden, um die jeweiligen Module miteinander verbinden zu können. Auf diese Weise wird der Aufwand zum Aufbau der Mikroskopievorrichtung erheblich verringert, während zugleich die Flexibilität erheblich erhöht wird und so Kosten eingespart werden können.

Es versteht sich, dass die Anregungsoptik jedes Anregungsmoduls und die Detektionsoptik jedes Detektionsmoduls auf die jeweils eingesetzte Art und/oder Anzahl an Anregungsquellen und/oder Detektionselementen im jeweiligen Anregungsmodul bzw. Detektionsmodul angepasst ist bzw. sind.

Insbesondere umfasst das Baukastensystem zumindest zwei verschiedene Anregungsmodule, die mit dem gleichen Detektionsmodul funktional kompatibel sind, und/oder zumindest zwei verschiedene Detektionsmodule, die mit dem gleichen Anregungsmodul funktional kompatibel sind.

"Funktional kompatibel" bezeichnet in diesem Zusammenhang, dass durch die jeweilige Kombination von Anregungsmodul und Detektionsmodul die Anregung von Fluoreszenz in der Probe und die anschließende Detektion der angeregten Fluoreszenz möglich ist.

Beispielhafte Betriebsmodi der so erhaltenen Mikroskopievorrichtung sind Konfokalmikroskopie, Weitfeldmikroskopie, Mikroskopie mit alternierender Laseranregung, Videomikroskopie, Fluoreszenz¬korrelationsspektroskopie (FCS), Einzelmolekül-Förster-Resonanzenergietransfer (smFRET), interne Totalreflexionsfluoreszenzmikroskopie (TIRFM) und Kombinationen davon.

In diesem Sinne kann die Mikroskopievorrichtung bei entsprechender Wahl des Anregungsmoduls und des Detektionsmoduls auch eine Spektroskopievorrichtung sein.

Somit zeichnet sich das erfindungsgemäße Baukastensystem durch eine besonders hohe Flexibilität aus, die auch zuvor nicht oder nur mit hohem Aufwand verbundene Kombinationen an Betriebsmodi in einem einzelnen kompakten Gerät ermöglicht.

Beispielsweise kann eine über das Baukastensystem erstellte Mikroskopievorrichtung anhand der im Baukastensystem vorhandenen Module, insbesondere der vorhandenen Anregungsmodule und/oder Detektionsmodule, von einem Betriebsmodus "Konfokalmikroskopie", in dem ausgewählte Teile der Probe beleuchtet und untersucht werden, zu einem Betriebsmodus "Weitfeldmikroskopie" umgebaut werden, in dem die gesamte zu untersuchende Probe beleuchtet wird.

Anders ausgedrückt ist das Baukastensystem dazu eingerichtet, eine Mikroskopievorrichtung bereitzustellen, die in zumindest zwei unterschiedlichen Betriebsmodi verwendet bzw. genutzt werden kann.

Das erfindungsgemäße Baukastensystem ermöglicht aufgrund seines modularen Aufbaus, dass auch weitere Anregungsmodule und Detektionsmodule nachträglich dem Baukastensystem hinzugefügt werden können, ohne dass eine Anpassung der bereits vorhandenen Module des Baukastensystems notwendig ist.

Mit anderen Worten ist das erfindungsgemäße Baukastensystem analog zu aus dem Spielzeugbereich bekannten Klemmbausteinsystemen modular aufgebaut und erweiterbar.

Auf diese Weise können mit dem erfindungsgemäßen Baukastensystem auch nachträglich vollkommen neue Betriebsmodi der darstellbaren Mikroskopievorrichtungen realisiert werden, beispielsweise zusätzliche Spektroskopiearten.

Die einheitlichen Verbindungsschnittstellen ermöglichen in diesem Sinne einen "Plug & Play"-Montageprozess der jeweiligen Mikroskopievorrichtung.

Die einheitlichen Verbindungsschnittstellen können zudem gemäß dem Poka-Yoke-Prinzip ausgestaltet sein, sodass ein fehlerhafter Zusammenbau der einzelnen Komponenten bzw. Module ausgeschlossen werden kann.

Die Anregungsmodule und/oder die Detektionsmodule des Baukastensystems sind bevorzugt automatisch justierende Anregungsmodule und/oder Detektions-module. In diesem Zusammenhang bezeichnet der Ausdruck "automatisch justierend", dass sich die in den Anregungsmodulen vorhandene(n) Anregungsquelle(n) und die Anregungsoptik und/oder die in den Detektionsmodulen vorhandene(n) Detektionselemente und die Detektionsoptik selbstständig justieren, beispielsweise mittels den entsprechenden Komponenten des Anregungsmoduls und/oder Detektionsmoduls jeweils zugeordneten Stellmechaniken. Auf diese Weise ist keine komplizierte Einstellung bzw. Justierung der beteiligten Optiken durch hoch spezialisiertes Fachpersonal notwendig, sodass sich das Baukastensystem und die mittels des Baukastensystems hergestellte Mikroskopievorrichtung einfach und ohne hohen Schulungsaufwand einsetzen lässt. In diesem Sinne stellt das erfindungsgemäße Baukastensystem auch in funktionaler Hinsicht ein "Plug & Play"-System dar, das heißt, die Mikroskopievorrichtung kann unmittelbar nach dem Zusammensetzen der benötigten Module eingesetzt werden.

Die zugeordneten Stellmechaniken können Piezomotoren umfassen, die dazu eingerichtet sind, die jeweils zugeordnete Komponente des Anregungsmoduls und/oder Detektionsmoduls zu justieren.

Es ist zudem möglich, dass wenigstens eines der Module des Baukastensystems, also insbesondere das Basismodul, das Detektionsmodul, das Anregungsmodul oder das Probenmodul, eine Steuerschnittstelle zur Datenübertragung aufweist, mittels der die anhand des Baukastensystems hergestellte Mikroskopievorrichtung mit einem externen Steuergerät zum Datenaustausch verbindbar ist, beispielsweise mit einem Computer. Die automatisch justierenden Anregungsmodule und/oder Detektionsmodule sind insbesondere dazu eingerichtet, anhand eines über die Steuerschnittstelle von dem externen Steuergerät empfangenen Einstellsignals die jeweiligen Komponenten des Anregungsmoduls und/oder Detektionsmoduls selbstständig zu justieren.

In einer Variante umfasst das Baukastensystem identisch ausgebildete Basismodule und/oder Probenmodule, wodurch sich die Kosten und die Komplexität des Baukastensystems weiter reduzieren lässt, da weniger verschiedene Teile vorgehalten werden müssen. Weiterhin bleibt jedoch die notwendige Variabilität für verschiedene Arten der Fluoreszenzmikroskopie bzw. Fluoreszenzspektroskopie, das heißt verschiedene Betriebsmodi, erhalten, da diese über die verschiedenen Anregungsmodule und Detektionsmodule gewährleistet bleibt.

Das zumindest eine Basismodul und/oder das zumindest eine Probenmodul weist bzw. weisen bevorzugt ebenfalls die einheitlichen Verbindungsschnittstellen auf, die auch bei den Detektionsmodulen und den Anregungsmodulen vorgesehen sind, um das Basismodul mit jedem der Detektionsmodule und das Probenmodul mit jedem der Anregungsmodule verbinden zu können.

Um die Kosten des Baukastensystems weiter zu senken und die Flexibilität in der Ausgestaltung des Baukastensystems weiter zu erhöhen, kann bzw. können das Basismodul und/oder ein Gehäuse des Detektionsmoduls, ein Gehäuse des Anregungsmoduls und/oder ein Gehäuse des Probenmoduls mittels eines additiven Verfahrens hergestellt sein.

Beispielsweise wird ein 3D-Druck-Verfahren als additives Verfahren genutzt.

In einer bevorzugten Variante sind sowohl das Basismodul, das Gehäuse des Detektionsmoduls, das Gehäuse des Anregungsmoduls und das Gehäuse des Probenmoduls mittels eines additiven Verfahrens hergestellt, insbesondere mittels eines 3D-Druck-Verfahrens.

Um das Gesamtgewicht und die Gesamtkosten der anhand des Baukastensystems herstellbaren Mikroskopievorrichtung zu reduzieren, können das Basismodul, das Gehäuse des Detektionsmoduls, das Gehäuse des Anregungsmoduls und/oder das Gehäuse des Probenmoduls aus einem Kunststoff sein.

In einer Variante ist das Basismodul aus einem thermoplastischen Kunststoff, bevorzugt aus einem thermoplastischen Polyurethan. Derartige Kunststoffe sind widerstandsfähig gegenüber Umwelteinflüssen und verfügen zudem über gummielastische Eigenschaften, sodass das Basismodul vibrationsdämpfend wirken kann. Auf diese Weise wird die Zuverlässigkeit und Stabilität der mittels des Basismoduls des Baukastensystems erzeugten Mikroskopievorrichtung weiter verbessert.

Als Detektionselement bzw. Detektionselemente können alle im Stand der Technik bekannten Detektionselemente zum Einsatz kommen.

Beispielsweise ist das Detektionselement bzw. sind die Detektionselemente wenigstens ein Photomultiplier (PM) oder ein Photomultiplier tube (PMT), wenigstens eine Avalanche-Photodiode (APD) und/oder wenigstens eine Kamera.

Die Kamera kann eine CCD-Kamera, eine EMCCD-Kamera (im Englischen auch als "electron multiplying CCD camera" bezeichnet), eine CMOS-Kamera oder eine sCMOS-Kamera (im Englischen auch als "scientific CMOS camera" bezeichnet) sein.

Um die Kosten und die Komplexität des Baukastensystems weiter zu verringern, kann die Kamera eine Smartphone-, Tablet- und/oder eine Actionkamera sein. Derartige Kameras weisen insbesondere für eine Vielzahl von Fluorenzvideomikroskopieverfahren eine ausreichende Detektionsgenauigkeit auf und sind weltweit kostengünstig verfügbar.

Selbstredend können je nach gewünschtem Betriebsmodus auch eine Mehrzahl der jeweiligen Art bzw. Arten an Detektionselementen vorhanden sein.

Beispielsweise können mehrere CMOS-Kameras zum Einsatz kommen.

Erfindungsgemäß ist das Detektionselement bzw. sind die Detektionselemente in wenigstens einem der Detektionsmodule in einem separaten Detektionsgehäuse angeordnet und mittels einer ersten optischen Faser mit der Detektionsoptik verbunden. Auf diese Weise kann die Gesamtgröße der übrigen Komponenten der mittels des Baukastensystems hergestellten Mikroskopievorrichtung reduziert werden, während zugleich eine flexible Anordnung des Detektionsgehäuses ermöglicht und ein ausreichend großer Bauraum für das Detektionselement bzw. die Detektionselemente bereitgestellt werden kann.

Die erste optische Faser fungiert zugleich als Lochblende, wodurch die Qualität der erhaltenen Mikroskopieaufnahmen, die anhand der vom Detektionselement bzw. von den Detektionselementen detektieren Messsignalen gewonnen werden, gesteigert werden kann bzw. kann eine konfokale Abbildung erreicht werden.

Das Baukastensystem kann eine Vielzahl von ersten optischen Fasern mit unterschiedlichem Faserdurchmesser umfassen. Mit zunehmend größerem Faserdurchmesser vergrößert sich das erzielbare Detektionsvolumen in der Probe und somit die Anzahl detektierbarer Moleküle in der Probe, während zugleich das Hintergrundrauschen zunimmt. Im Gegensatz dazu verringert sich mit zunehmend kleinerem Faserdurchmesser das Detektionsvolumen der Probe und somit die Anzahl detektierbarer Moleküle in der Probe, während zugleich das Hintergrundrauschen abnimmt. Somit kann unter den im Baukastensystem vorhandenen ersten optischen Fasern auf einfache Weise diejenige ausgewählt werden, die für die gewünschte Mikroskopievorrichtung einen optimalen Kompromiss aus Detektionsvolumen und Hintergrundrauschen bereitstellt. Durch die Modularität des Baukastensystems sind auf diese Weise einfach und in kürzester Zeit optimierte Mikroskopievorrichtungen darstellbar.

Der Faserdurchmesser der ersten optischen Faser liegt insbesondere im Bereich von 2 bis 25 µm.

In einer weiteren Variante ist die Anregungsquelle bzw. sind die Anregungsquellen in einem separaten Anregungsgehäuse angeordnet und mittels einer zweiten optischen Faser mit der Anregungsoptik verbunden. Auch eine solche Ausgestaltung ermöglicht es, dass die Gesamtgröße der übrigen Komponenten der mittels des Baukastensystems hergestellten Mikroskopievorrichtung reduziert werden, während zugleich eine flexible Anordnung des Anregungsgehäuses ermöglicht und ein ausreichend großer Bauraum für die Anregungsquelle bzw. sind die Anregungsquellen bereitgestellt werden kann.

Analog zur ersten optischen Faser kann das Baukastensystem eine Vielzahl von zweiten optischen Fasern mit unterschiedlichem Faserdurchmesser umfassen.

Das Detektionsgehäuse und/oder das Anregungsgehäuse kann bzw. können mittels eines additiven Verfahrens hergestellt sein, insbesondere mittels eines 3D-Druck-Verfahrens. Auf diese Weise lassen sich die Gesamtkosten des Baukastensystems und der anhand des Baukastensystems hergestellten Mikroskopievorrichtung weiter reduzieren.

Insbesondere sind die Gehäuse der verschiedenen Komponenten des Baukastensystems, beispielsweise das Detektionsgehäuse und das Anregungsgehäuse, derart ausgeführt, dass die mittels des Baukastensystems hergestellte Mikroskopievorrichtung vom Umgebungslicht abgeschirmt ist, insbesondere vollständig abgeschirmt ist. Dies ermöglicht es, die Mikroskopie-vorrichtung auch in Arbeitsumgebungen einzusetzen, wie sie normalerweise in Laboren vorgefunden werden, das heißt, die Mikroskopievorrichtung muss nicht zwangsläufig in einem speziellen Dunkelraum betrieben werden.

Die Anregungsquelle bzw. die Anregungsquellen kann bzw. können eine einzelne Laserquelle oder eine Vielzahl von Laserquellen sein.

Während bei Einsatz einer einzelnen Laserquelle die Komplexität und die Kosten des jeweiligen Anregungsmoduls reduziert sind, erlaubt die Verwendung einer Vielzahl von Laserquellen komplexere Arten der Fluoreszenzmikroskopie bzw. Fluoreszenzspektroskopie, beispielsweise eine alternierende Laseranregung (im Englischen auch als "alternating laser excitation", ALEX, bezeichnet) und/oder Zweifarben-Fluoreszenzkorrelationsspektroskopie (im Englischen auch als "dual-color FCS" bezeichnet).

Insbesondere kann durch das modulare Baukastensystem je nach Bedarf auf einfache Weise zwischen der Anregung mit einer einzelnen Laserquelle und der Anregung mittels mehrerer Laserquellen gewechselt werden, indem das Anregungsmodul ausgetauscht wird.

Die Wellenlänge bzw. Wellenlängen der von der Anregungsquelle bzw. den Anregungsquellen erzeugten elektromagnetischen Strahlung ist auf die in der jeweiligen zu untersuchenden Probe eingesetzten Fluorophore abgestimmt.

Das erfindungsgemäße Baukastensystem ermöglicht es, dass mit äußerst geringem Aufwand das Anregungsmodul bei Bedarf gegen ein solches ausgetauscht werden kann, welches die benötigte Wellenlänge bzw. die benötigten Wellenlängen bereitstellen kann.

Das Probenmodul umfasst insbesondere einen Probenhalter, der dazu eingerichtet ist, die zu untersuchende Probe aufzunehmen und insbesondere zu fixieren. Beispielsweise ist die Probe auf einen Objektträger aufgebracht, der dazu ausgelegt ist, in einen im Probenhalter angeordneten Aufnahmeraum eingelegt zu werden.

Um die Positionierung der Probe weiter zu verbessern, kann der Probenhalter mittels einer Haltevorrichtung zerstörungsfrei lösbar fixiert sein. Beispielsweise verfügt der Probenhalter über Magnete und der Objektträger über komplementäre Magnete, die mittels magnetischer Anziehung zerstörungsfrei lösbar aneinander fixierbar sind.

Das Probenmodul verfügt bevorzugt ebenfalls über ein Probengehäuse, das den Probenhalter vom Umgebungslicht abschirmt. Auf diese Weise wird der Einfluss von Umgebungslicht auf die mit der Mikroskopievorrichtung durchgeführten Messungen weiter verringert.

In einer Variante verfügt das Probenmodul über Fluidkanäle, insbesondere Mikrofluidkanäle, über die eine zu untersuchende Probe in das Probenmodul einbringbar ist. Auf diese Weise kann das Probenmodul als Durchflussprobenhalter ausgestaltet sein.

Um den Aufwand zum Herstellen der Mikroskopievorrichtung weiter zu verringern, kann das Basismodul, das jeweilige, zum Ausbilden der Mikroskopievorrichtung ausgewählte Detektionsmodul, das jeweilige, zum Ausbilden der Mikroskopievorrichtung ausgewählte Anregungsmodul und das Probenmodul jeweils werkzeugfrei miteinander verbindbar sein.

In einer Variante sind das Basismodul, das Detektionsmodul, das Anregungsmodul und/oder das Probenmodul zerstörungsfrei lösbar aufgesetzt. Auf diese Weise ist es besonders einfach möglich, die zerstörungsfrei miteinander verbundenen Module bei Bedarf auszutauschen und so beispielsweise zu einem anderen Betriebsmodus der Mikroskopievorrichtung zu wechseln.

Bevorzugt ist das Baukastensystem dazu eingerichtet, eine Mikroskopievorrichtung bereitzustellen, die aus dem Basismodul, dem Detektionsmodul, dem Anregungsmodul und dem Probenmodul und optional einer Adapterplatte und/oder einer Blende besteht. Anders ausgedrückt wird die Mikroskopievorrichtung vollständig durch die im Baukastensystem bereitgestellten Komponenten gebildet. Auf diese Weise ergibt sich eine besonders einfache und kompakte Bauweise der bereitgestellten Mikroskopievorrichtung.

Die Aufgabe der Erfindung wird ferner gelöst durch eine Mikroskopievorrichtung zum Beobachten von in einer Probe angeregter Fluoreszenz gemäß Anspruch 8, die mittels des zuvor beschriebenen Baukastensystems hergestellt ist.

Die Merkmale und Eigenschaften des Baukastensystems gelten entsprechend für die Mikroskopievorrichtung und umgekehrt.

Die Mikroskopievorrichtung ist beispielsweise ein Weitfeldmikroskop, ein Konfokalmikroskop oder ein Mikroskop mit alternierender Laseranregung, beispielsweise ein Weitfeldmikroskop mit alternierender Laseranregung oder ein Konfokalmikroskop mit alternierender Laseranregung.

Die mittels des erfindungsgemäßen Baukastensystems hergestellte Mikroskopievorrichtung zeichnet sich insbesondere durch eine geringe Komplexität aus, sowohl hinsichtlich ihrer Montage als auch ihres Betriebs. Dies ermöglicht insbesondere den Aufbau und Betrieb der erfindungsgemäßen Mikroskopievorrichtung durch einfacher geschultes Bedienpersonal als es bei konventionellen Fluoreszenzmikroskopen und Fluoreszenzspektroskopen der Fall ist.

Zudem ist die Mikroskopievorrichtung über die im Baukastensystem vorhandenen Komponenten umrüstbar. Anders ausgedrückt kann durch Austausch eines oder mehrerer Module der Mikroskopievorrichtung dessen Betriebsmodus geändert werden.

Somit ist die Mikroskopievorrichtung dazu eingerichtet, in zumindest zwei unterschiedlichen Betriebsmodi verwendet bzw. genutzt zu werden.

Beispielsweise ist die Mikroskopievorrichtung von einem Konfokalmikroskop auf ein Weitfeldmikroskop umrüstbar und umgekehrt.

Die Mikroskopievorrichtung zeichnet sich durch eine besonders kompakte Bauweise aus. So weist die gesamte Mikroskopievorrichtung bevorzugt Abmessungen von höchstens 20 x 20 x 25 cm auf (Breite x Tiefe x Höhe) auf, beispielsweise von 18 x 18 x 23 cm.

Verfügt die Mikroskopievorrichtung über ein separates Anregungsgehäuse und/oder ein separates Detektionsgehäuse bleiben diese Komponenten in Bezug auf die Abmessungen außer Betracht.

Somit eignet sich die Mikroskopievorrichtung auch für den Einsatz als Tischgerät, beispielsweise auf einem Labortisch, und es kann auf spezielle Tischaufbauten für die Mikroskopievorrichtung verzichtet werden.

Bevorzugt besteht die Mikroskopievorrichtung aus einem Basismodul, einem Detektionsmodul, einem Anregungsmodul und einem Probenmodul und optional einer Adapterplatte und/oder einer Blende.

Zudem wird die Aufgabe der Erfindung gelöst durch ein Verfahren zum Herstellen einer Mikroskopievorrichtung basierend auf einem Baukastensystem, insbesondere einem Baukastensystem wie zuvor beschrieben, gemäß Anspruch 10 mit den folgenden Schritten:
- Auswählen eines Detektionsmoduls aus mehreren Detektionsmodulen, die eine unterschiedliche Art und/oder Anzahl an Detektionselementen sowie eine Detektionsoptik aufweisen;
- Verbinden des ausgewählten Detektionsmoduls mit einem Basismodul;
- Auswählen eines Anregungsmoduls aus mehreren Anregungsmodulen, die eine unterschiedliche Art und/oder Anzahl an Anregungsquellen sowie eine Anregungsoptik aufweisen;
- Verbinden des ausgewählten Anregungsmoduls mit dem ausgewählten Detektionsmodul; und
- Verbinden eines Probenmoduls mit dem ausgewählten Anregungsmodul.

Es versteht sich, dass die zuvor beschriebenen Schritte des erfindungsgemäßen Verfahrens sowohl in der angegebenen oder in einer abweichenden Reihenfolge durchgeführt werden können. Insbesondere die Auswahl der entsprechenden Module kann vorab erfolgen, da beispielsweise das Anregungsmodul bereits ausgewählt werden kann, bevor das Detektionsmodul mit dem Basismodul verbunden wird.

Durch den Einsatz des Baukastensystems ermöglicht es das erfindungsgemäße Verfahren innerhalb vergleichsweise kurzer Zeit eine gewünschte Mikroskopievorrichtung zu erhalten und in Betrieb zu setzen. Insbesondere kann die Mikroskopievorrichtung innerhalb eines Zeitraums von unter 10 Minuten zusammengesetzt und betriebsbereit gemacht werden.

### KURZBESCHREIBUNG DER ZEICHNUNGEN

Weitere Merkmale und Eigenschaften der Erfindung werden aus der nachfolgenden Beschreibung beispielhafter Ausführungsformen deutlich, die nicht in einem einschränkenden Sinn verstanden werden sollen, sowie aus den Zeichnungen, auf die Bezug genommen wird. In diesen zeigen:
- Fig. 1 ein erfindungsgemäßes Baukastensystem, aus dem eine erfindungsgemäße Mikroskopievorrichtung gebaut werden kann;
- Fig. 2 eine erste Ausführungsform einer erfindungsgemäßen Mikroskopievorrichtung, hergestellt mittels des Baukastensystems aus Fig. 1;
- Fig. 3 eine schematische Darstellung der Funktionsweise der Mikroskopievorrichtung aus Fig. 2;
- Fig. 4 eine zweite Ausführungsform einer erfindungsgemäßen Mikroskopievorrichtung, hergestellt mittels des Baukastensystems aus Fig. 1;
- Fig. 5 eine schematische Darstellung der Funktionsweise der Mikroskopievorrichtung aus Fig. 3;
- Fig. 6 eine dritte Ausführungsform einer erfindungsgemäßen Mikroskopievorrichtung, hergestellt mittels des Baukastensystems aus Fig. 1;
- Fig. 7 eine schematische Darstellung der Funktionsweise der Mikroskopievorrichtung aus Fig. 6;
- Fig. 8 eine vierte Ausführungsform einer erfindungsgemäßen Mikroskopievorrichtung, hergestellt mittels des Baukastensystems aus Fig. 1;
- Fig. 9 eine fünfte Ausführungsform einer erfindungsgemäßen Mikroskopievorrichtung, hergestellt mittels des Baukastensystems aus Fig. 1;
- Fig. 10 eine schematische Darstellung der Funktionsweise der Mikroskopievorrichtungen aus Fig. 8 und 9;
- Fig. 11 eine sechste Ausführungsform einer erfindungsgemäßen Mikroskopievorrichtung, hergestellt mittels des Baukastensystems aus Fig. 1;
- Fig. 12 eine siebte Ausführungsform einer erfindungsgemäßen Mikroskopievorrichtung, hergestellt mittels des Baukastensystems aus Fig. 1;
- Fig. 13 eine schematische Darstellung der Funktionsweise der Mikroskopievorrichtung aus Fig. 11 und 12;
- Fig. 14 ein Blockschema eines erfindungsgemäßen Verfahrens zum Herstellen einer Mikroskopievorrichtung basierend auf dem Baukastensystem aus Fig. 1.

### DETAILLIERTE BESCHREIBUNG

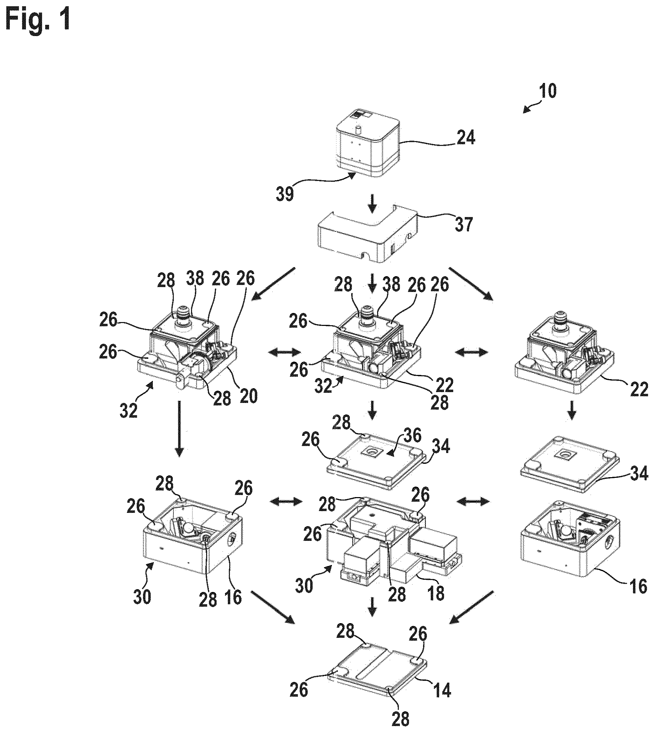

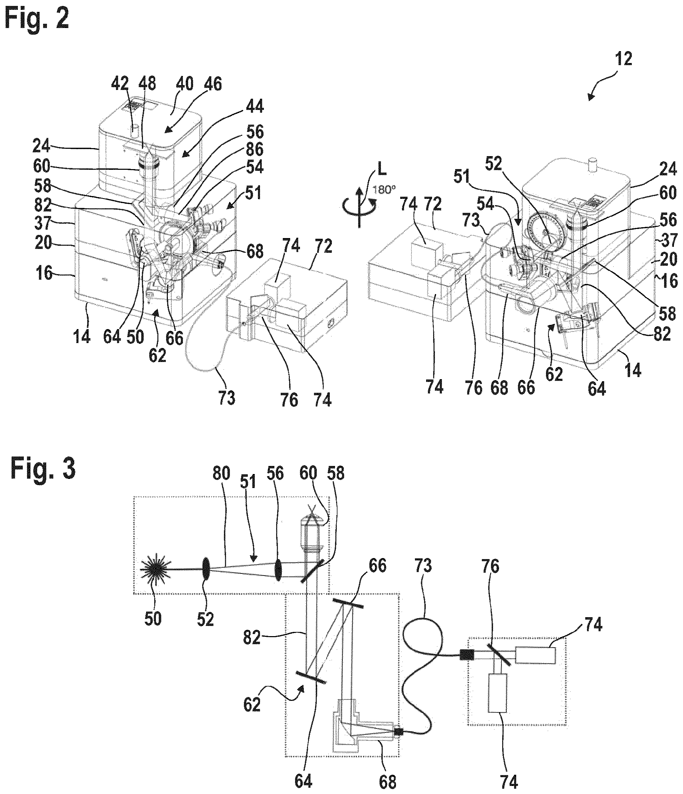

Fig. 1 zeigt ein erfindungsgemäßes Baukastensystem 10 für eine Mikroskopievorrichtung 12 (vgl. Fig. 2, 4, 6, 8, 9, 11 und 12), die aus den Komponenten des Baukastensystems 10 zusammengebaut werden kann.

Das Baukastensystem 10 umfasst ein Basismodul 14, hier beispielsweise als Bodenplatte ausgebildet, mehrere Detektionsmodule 16 und 18, mehrere Anregungsmodule 20 und 22 sowie ein Probenmodul 24.

In der gezeigten Ausführungsform des Baukastensystems 10 sind zwei Detektionsmodule 16 und 18 und zwei Anregungsmodule 20 und 22 vorhanden. Die Anzahl der Detektionsmodule und/oder Anregungsmodule kann aber variieren, sodass auch drei, vier oder mehr Detektionsmodule bzw. Anregungsmodule vorgesehen sein können.

Das Baukastensystem 10 ist dazu eingerichtet, durch eine Kombination des Basismoduls 14, eines der Detektionsmodule 16 und 18, eines der Anregungsmodule 20 und 22 sowie des Probenmoduls 24 die Mikroskopievorrichtung 12 zu erhalten, wobei die jeweilige Ausgestaltung der Mikroskopievorrichtung 12 über die Wahl des jeweiligen Detektionsmoduls 16 bzw. 18 in Kombination mit dem jeweiligen Anregungsmodul 20 bzw. 22 bestimmbar ist.

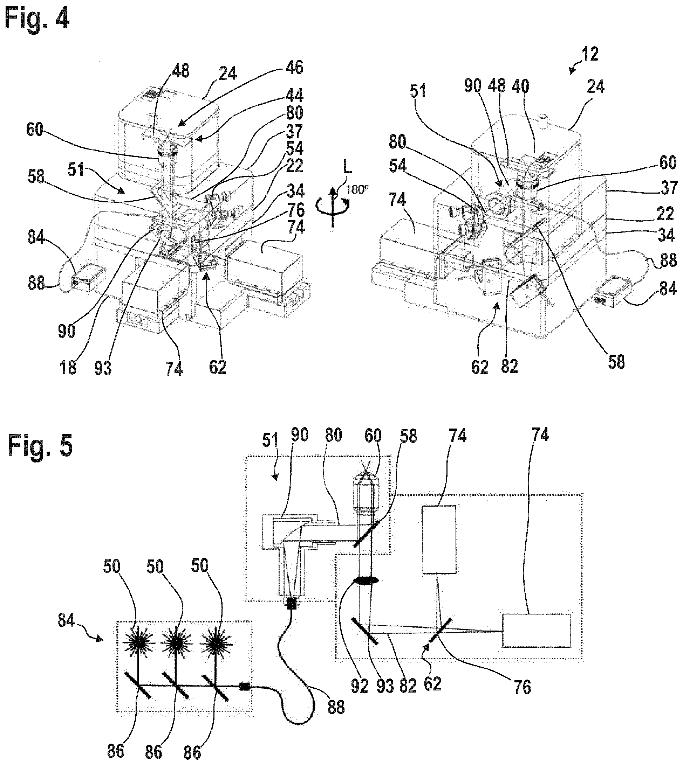

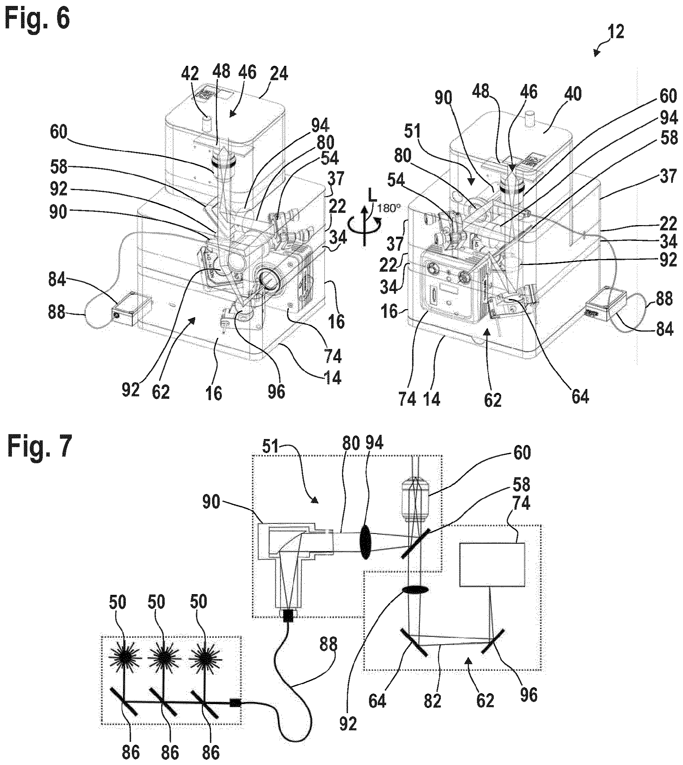

Beispielsweise wird bei einer Kombination des Detektionsmoduls 16 mit dem Anregungsmodul 20 eine Mikroskopievorrichtung 12 in einem ersten Betriebsmodus (vgl. Fig. 2) bereitgestellt, bei einer Kombination des Detektionsmoduls 18 mit dem Anregungsmodul 22 eine Mikroskopievorrichtung 12 in einem zweiten Betriebsmodus (vgl. Fig. 4) bereitgestellt und bei einer Kombination des Detektionsmoduls 16 mit dem Anregungsmodul 22 eine Mikroskopievorrichtung 12 in einem dritten Betriebsmodus (vgl. Fig. 6) bereitgestellt.

Auf die Ausgestaltung der verschiedenen Detektionsmodule 16 und 18 sowie Anregungsmodule 20 und 22 wird später genauer eingegangen.

Es versteht sich, dass das erfindungsgemäße Baukastensystem 10 auch mehr als eine Art an Basismodul 14 und/oder Probenmodul 24 aufweisen kann als in Fig. 1 dargestellt.

Das Basismodul 14 ist in der gezeigten Ausführungsform ein mittels eines additiven Herstellungsverfahrens, beispielsweise mittels 3D-Druck, hergestelltes Bauteil aus einem Kunststoff.

Das Basismodul 14 weist eine in etwa rechteckige Kontur mit abgerundeten Ecken auf, wobei in jeder der Ecken des Basismoduls 14 eine Verbindungsschnittstelle 26 bzw. 28 vorgesehen ist, die insbesondere nach dem Poka-Yoke-Prinzip ausgebildet sind, sodass die entsprechenden Module über die Verbindungsschnittstellen 26, 28 nur in einer definierten Weise miteinander verbunden werden können. Ein verdrehter, insbesondere ein um 180° verdrehter, Zusammenbau ist somit ausgeschlossen.

Mit anderen Worten bilden die Verbindungsschnittstellen 26 bzw. 28 in der dargestellten Ausführungsform zwei Verbindungsschnittstellengruppen, wobei die Verbindungsschnittstellen der jeweiligen Verbindungsschnittstellengruppe in quer gegenüberliegenden Ecken des Basismoduls 14 angeordnet sind. Auf diese Weise wird eine Soll-Montageposition vorgegeben, sodass die Gefahr von Fehlkonstruktionen beim Zusammenbau der Mikroskopievorrichtung 12 reduziert wird.

Die Verbindungsschnittstellen 26 und 28 des Basismoduls 14 dienen dazu, das Basismodul 14 mit dem jeweiligen Detektionsmodul 16 bzw. 18 werkzeugfrei und zerstörungsfrei lösbar zu verbinden. Hierzu können entsprechend korrespondierende Gegenstücke am jeweiligen Detektionsmodul 16 bzw. 18 vorgesehen sein, insbesondere ebenfalls Verbindungsschnittstellen.

Jedes der Detektionsmodule 16 und 18 sowie der Anregungsmodule 20 und 22 weisen demnach ebenfalls Verbindungsschnittstellen 26 und 28 auf, die identisch bzw. korrespondierend zu den Verbindungsschnittstellen 26 und 28 des Basismoduls 14 ausgebildet sind.

Die Detektionsmodule 16 und 18 und die Anregungsmodule 20 und 22 besitzen an ihren jeweiligen Unterseiten 30 bzw. 32 jeweils (nicht dargestellte) komplementäre Aufnahmen für die Verbindungsschnittstellen 26 bzw. 28 auf, sodass die Befestigung zwischen dem Basismodul 14 und dem jeweiligen Detektionsmodul 16 bzw. 18, sowie die Befestigung zwischen dem jeweiligen Detektionsmodul 16 bzw. 18 und dem jeweiligen Anregungsmodul 20 bzw. 22 durch Ineinandergreifen der jeweiligen Verbindungsschnittstellen 26 bzw. 28 mit jeweils zugeordneten Aufnahmen auf einfache Weise erzielt wird.

In Fig. 1 ist zu erkennen, dass das Baukastensystem 10 zusätzlich eine Adapterplatte 34 umfasst, welche auf das Detektionsmodul 16 bzw. 18 aufsetzbar ist und an seiner Oberseite 36 ebenfalls identisch ausgebildete Verbindungsschnittstellen 26 und 28 aufweist. Die Adapterplatte 34 ermöglicht eine noch flexiblere Ausgestaltung der einzelnen Module des Baukastensystems 10, da über die Adapterplatte 34 auf einfache Weise zusätzliche Bauteile implementiert und/oder zusätzlicher Bauraum bereitgestellt werden kann.

Zudem umfasst das Baukastensystem 10 eine Blende 37, die ebenfalls mittels Verbindungsschnittstellen 26 bzw. 28 mit dem Anregungsmodul 20 bzw. 22 zerstörungsfrei lösbar und werkzeugfrei verbindbar ist. Zudem dient die Blende 37 zum Schutz eines Teils der Komponenten des jeweiligen Anregungsmoduls 20 bzw. 22.

In Fig. 1 ist zu erkennen, dass die Anregungsmodule 20 bzw. 22 zusätzliche Verbindungsschnittstellen 26 und 28 auf einem Vorsprung 38 aufweisen, die dazu dienen, das Probenmodul 24 mit dem jeweiligen Anregungsmodul 20 bzw. 22 werkzeugfrei und zerstörungsfrei lösbar zu verbinden.

Das Probenmodul 24 weist analog an seiner Unterseite 39 (nicht dargestellte) Aufnahmen auf, die den Verbindungsschnittstellen 26 und 28 auf dem Anregungsmodul 20 bzw. 22 zugeordnet sind.

Die Pfeile und Doppelpfeile in Fig. 1 verdeutlichen die Vielzahl an Kombinationsmöglichkeiten der verschiedenen Module, der Adapterplatte 34 und der Blende 37 untereinander, die das erfindungsgemäße Baukastensystem 10 ermöglicht. Jede dieser Kombinationen führt somit zur Konstruktion einer Mikroskopievorrichtung mit einem jeweiligen Betriebsmodus, wobei der Betriebsmodus durch die Kombination aus Detektionsmodul 16 bzw. 18 und Anregungsmodul 20 bzw. 22 vorgegeben wird.

Ein erfindungsgemäßes Verfahren zum Herstellen einer Mikroskopie-vorrichtung umfasst somit folgende Schritte.

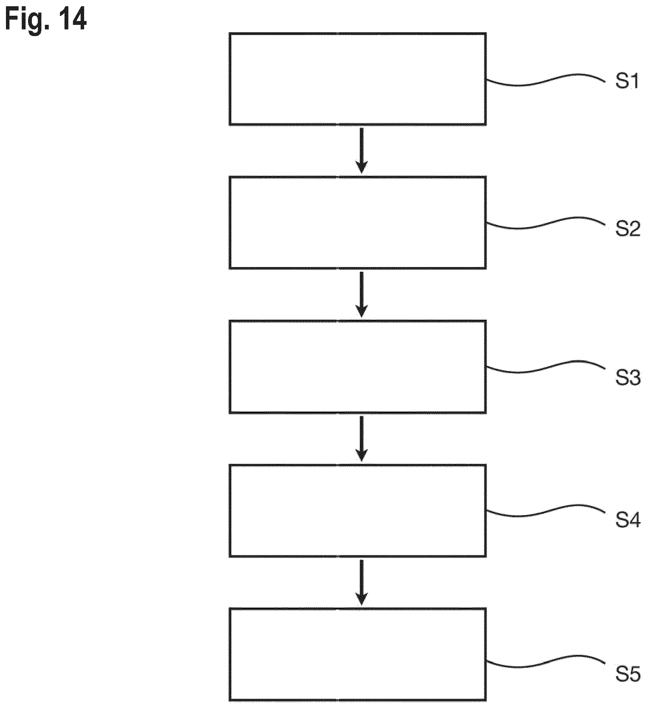

Zunächst wird ein Detektionsmodul aus den mehreren Detektionsmodulen 16 und 18 ausgewählt (vgl. Schritt S1 in Fig. 14). Das ausgewählte Detektionsmodul wird anschließend mit dem Basismodul 14 verbunden (vgl. Schritt S2 in Fig. 14).

Zudem wird ein Anregungsmodul aus den mehreren Anregungsmodulen 20 und 22 ausgewählt (vgl. Schritt S3 in Fig. 14) und mit dem ausgewählten Detektionsmodul verbunden (vgl. Schritt S4 in Fig. 14).

Optional kann zuvor die Adapterplatte 34 auf das ausgewählte Detektionsmodul aufgesetzt werden, wodurch das ausgewählte Anregungsmodul lediglich indirekt unter Zwischenlagerung der Adapterplatte 34 mit dem ausgewählten Detektionsmodul verbunden wird.

Ebenfalls optional, jedoch bevorzugt wird die Blende 37 auf das ausgewählte Anregungsmodul aufgesetzt.

Schließlich wird das Probenmodul 24 mit dem ausgewählten Anregungsmodul verbunden (vgl. Schritt S5 in Fig. 14) unter Erhalt der Mikroskopievorrichtung 12.

In Fig. 2 ist eine erste Ausführungsform einer erfindungsgemäßen Mikroskopievorrichtung 12 gezeigt, die mittels des Baukastensystems 10 hergestellt ist, wobei eine perspektivische Ansicht von schräg vorne und eine um 180° um eine Längsachse L gedrehte weitere Ansicht dargestellt ist.

Die Mikroskopievorrichtung 12 der ersten Ausführungsform, wie in Fig. 2 gezeigt, umfasst das Basismodul 14, das Detektionsmodul 16, das Anregungsmodul 20, die Blende 37 und das Probenmodul 24, die jeweils aufeinander aufgesetzt und miteinander verbunden sind.

Das Probenmodul 24 verfügt über einen schwenk- und/oder abnehmbaren Deckel 40, das heißt, der Deckel 40 kann verschwenkt bzw. abgenommen werden, um Zugang zu einem Innenraum des Probenmoduls 24 zu erhalten.

Im Innenraum des Probenmoduls 24 ist eine Aufnahme 44 für eine Probe 46 vorhanden, wobei die Probe 46 wiederum auf einem Objektträger 48 aufgebracht ist.

Die Höhe der Probe 46 über einem Objektiv 60 ist mittels eines mechanischen Verschiebetisches einstellbar, dessen Position über ein Stellrad 42 veränderbar ist.

Das Anregungsmodul 20 verfügt in der ersten Ausführungsform über eine einzelne Anregungsquelle 50, welche als einzelne Laserquelle ausgebildet ist.

Das Anregungsmodul 20 verfügt zudem über eine Anregungsoptik 51, die eine erste Anregungslinse 52, einen ersten Anregungsspiegel 54, eine zweite Anregungslinse 56, einen Strahlteiler 58 sowie ein Objektiv 60 umfasst.

Das Detektionsmodul 16 wiederum verfügt über eine Detektionsoptik 62, die einen ersten Detektionsspiegel 64, einen zweiten Detektionsspiegel 66 und einen reflektierenden Detektionskollimator 68 umfasst.

Ferner verfügt das Detektionsmodul 16 über ein separates Detektionsgehäuse 72, welches über eine erste optische Faser 73 mit der Detektionsoptik 62 verbunden ist.

Im separaten Detektionsgehäuse 72 sind zwei Detektionselemente 74 sowie ein Detektionsstrahlteiler 76 angeordnet, wobei die Detektionselemente 74 als Photomultiplier ausgebildet sind.

Grundsätzlich ist auch der Einsatz anderer Arten von Detektionselementen 74 denkbar, beispielsweise von Avalanche-Photodioden.

Es versteht sich, dass die Anregungsoptik 51 und die Detektionsoptik 62 mit weiteren optischen Bauteilen abgewandelt werden kann, wie es im Bereich der Fluoreszenzmikroskopie bekannt ist, solange die weiteren optischen Bauteile im jeweiligen Anregungsmodul 20 bzw. Detektionsmodul 16 untergebracht werden können.

Die Mikroskopievorrichtung 12 zeichnet sich durch eine besonders kompakte Bauweise aus. So weist die gesamte Mikroskopievorrichtung, das separate Detektionsgehäuse 72 ausgenommen, lediglich Abmessungen von etwa 20 x 20 x 25 cm auf (Breite x Tiefe x Höhe), beispielsweise von 18 x 18 x 23 cm.

Das Anregungsmodul 20 und das Detektionsmodul 16 sind sich automatisch justierende Detektions- und Anregungsmodule, das heißt, sobald die Module der Mikroskopievorrichtung 12 miteinander verbunden wurden, justieren sich die Anregungsoptik 51 und die Detektionsoptik 62 selbsttätig.

Zudem sind die Außenwände der Komponenten der Mikroskopievorrichtung 12 lichtundurchlässig, sodass die Mikroskopievorrichtung 12 auch außerhalb von Dunkelräumen betrieben werden kann.

Bei der in Fig. 2 gezeigten ersten Ausführungsform der Mikroskopie-vorrichtung 12 handelt es sich insbesondere um ein konfokales Fluoreszenzmikroskop für die sensitive Detektion von diffundierenden oder sich im Durchfluss befindlichen Partikeln und Teilchen mittels Photomultiplier-Modulen und Anregung der Probe mittels einer einzelnen Wellenlänge, beispielsweise über eine Laserdiode.

In Bezug auf Fig. 3 wird folgend die Funktionsweise der ersten Ausführungsform der Mikroskopievorrichtung 12 in Bezug auf den in der Mikroskopievorrichtung 12 eingesetzten optischen Strahlengang weiter erläutert.

Mittels der Anregungsquelle 50 wird Laserlicht einer vorgegebenen Wellenlänge erzeugt, welches in Fig. 3 mit dem Bezugszeichen 80 gekennzeichnet ist.

Die Lichtstrahlen des Laserlichts 80 werden mittels der ersten Anregungslinse 52 aufgefächert und mittels der zweiten Anregungslinse 56 parallelisiert, bevor sie auf einen Strahlteiler 58 treffen, der das aufgefächerte und parallelisierte Laserlicht 80 in einem 90°-Winkel zum Objektiv 60 umleitet.

In Fig. 2 ist zu erkennen, dass der erste Anregungsspiegel 54 im Strahlgang des Laserlichts 80 zwischen der ersten Anregungslinse 52 und der zweiten Anregungslinse 56 angeordnet ist. Der erste Anregungsspiegel 54 dient vor allem dazu, die kompakte Bauweise des Anregungsmoduls 20 zu ermöglichen.

Das Objektiv 60 fokussiert das Laserlicht 80 wiederum auf einen ausgewählten Punkt des Objektträgers 48, an dem die zu untersuchende Probe 46 aufgebracht ist (vgl. Fig. 2).

In der Probe 46 ist zumindest ein Fluorophor enthalten, beispielsweise grün fluoreszierendes Protein (GFP), synthetische organische Fluorophore wie Cyanin 3 oder Cyanin 5 oder fluoreszierende Nanopartikel (sogenannte "Quantum Dots").

Es versteht sich, dass die Wellenlänge des Laserlichts 80 auf den in der Probe 46 eingesetzten Fluorophor abgestimmt ist, das heißt sich im Bereich hoher Absorption des Fluorophors befindet.

Das Laserlicht 80 regt somit eine Fluoreszenz innerhalb der Probe 46 an, wodurch ein Fluoreszenzlicht, in Fig. 3 mit dem Bezugszeichen 82 bezeichnet, von der Probe 46 in Richtung des Strahlteilers 58 ausgesandt wird.

Das Fluoreszenzlicht 82 passiert den Strahlteiler 58 in Richtung der Detektionsoptik 62.

In der Detektionsoptik 62 wird das Fluoreszenzlicht 82 über den ersten Detektionsspiegel 64 und den zweiten Detektionsspiegel 66 zum reflektierenden Detektionskollimator 68 geleitet, welcher den Strahlquerschnitt des Fluoreszenzlichts 82 auf einen Durchmesser gleich oder kleiner der ersten optischen Faser 73 reduziert.

Das Fluoreszenzlicht 82 wird anschließend durch die erste optische Faser 73 und in das separate Detektionsgehäuse 72 geleitet und trifft dort auf den Detektionsstrahlteiler 76, der das Fluoreszenzlicht 82 in zwei Teilstrahlen aufteilt, die jeweils mittels einem der Detektionselemente 74 detektiert werden können.

Auf diese Weise erlaubt die erste Ausführungsform der Mikroskopie-vorrichtung 12 beispielsweise Konfokalmikroskopie, sensitive Detektion einzelner Moleküle oder Partikel und Fluoreszenzkorrelationsspektroskopie (FCS).

In Fig. 4 ist eine (nicht anspruchsgemäße) zweite Ausführungsform der Mikroskopievorrichtung 12 gezeigt, die mittels des Baukastensystems 10 hergestellt ist, wobei eine perspektivische Ansicht von schräg vorne und eine um 180° um eine Längsachse L gedrehte weitere Ansicht dargestellt ist.

Es handelt sich hierbei insbesondere um ein konfokales Fluoreszenzmikroskop für die sensitive Detektion von diffundierenden oder sich im Durchfluss befindlichen Teilchen mittels APD-Detektion und Anregung über ein fasergekoppeltes Lasermodul.

Die zweite Ausführungsform entspricht im Wesentlichen der vorherigen Ausführungsform, sodass im Folgenden lediglich auf Unterschiede eingegangen wird. Gleiche Bezugszeichen bezeichnen gleiche oder funktionsgleiche Bauteile und es wird auf die obigen Ausführungen verwiesen.

Die Mikroskopievorrichtung 12 der zweiten Ausführungsform umfasst das Detektionsmodul 18, das Anregungsmodul 22, die Adapterplatte 34, die Blende 37 und das Probenmodul 24, die jeweils aufeinander aufgesetzt und miteinander verbunden sind.

In der zweiten Ausführungsform umfasst das Anregungsmodul 22 ein separates Anregungsgehäuse 84, in welchem mehrere Anregungsquellen 50 angeordnet sind, wobei jede der Anregungsquellen 50 ein Laser ist, der Laserlicht 80 einer anderen Wellenlänge als die übrigen Anregungsquellen 50 erzeugt.

Jeder Anregungsquelle 50 ist ein zweiter Anregungsspiegel 86 zugeordnet, wobei die zweiten Anregungsspiegel 86 so angeordnet und ausgerichtet sind, dass das von jedem der Laser erzeugte Laserlicht 80 zu einer zweiten optischen Faser 88 geleitet wird, die das separate Anregungsgehäuse 84 mit der Anregungsoptik 51 verbindet und die insbesondere eine sogenannte "singlemode" Faser ist.

Als separates Anregungsgehäuse 84 mit den zugeordneten Anregungsquellen 50 kann ein entsprechender kommerziell erhältlicher Laser mit mehreren Anregungswellenlängen verwendet werden.

Grundsätzlich ließe sich auch ein Aufbau analog zu Fig. 4 realisieren, in welchem sich im separaten Anregungsgehäuse 84 eine oder mehrere Anregungsquellen befinden, die lediglich eine einzelne Anregungswellenlänge bereitstellen.

In der zweiten Ausführungsform wird die Anregungsoptik 51 von einem reflektierenden Anregungskollimator 90, dem ersten Anregungsspiegel 54 und dem Strahlteiler 58 gebildet.

Die Detektionsoptik 62 wird in der zweiten Ausführungsform von einer ersten Detektionslinse 92 und einem dritten Detektionsspiegel 93 gebildet.

Zum Detektieren des Fluoreszenzlichtes 82 werden auch in der zweiten Ausführungsform zwei Detektionselemente 74 eingesetzt, wobei jeder der Detektionselemente 74 einem Teilstrahl des Fluoreszenzlichts 82 zugeordnet ist, die mittels des Detektorstrahlteilers 76 erzeugt werden.

Jedoch befinden sich in der zweiten Ausführungsform die Detektionselemente 74 nicht in einem separaten Detektionsgehäuse 72, sondern sind direkt an das Gehäuse des Detektionsmoduls 18 angeschlossen (vgl. Fig. 4).

Die Detektionselemente 74 sind in der zweiten Ausführungsform bevorzugt Avalanche-Photodioden (APD).

Fig. 5 zeigt schematisch die Funktionsweise der Mikroskopievorrichtung 12 der (nicht anspruchsgemäßen) zweiten Ausführungsform in Bezug auf den in der Mikroskopievorrichtung 12 eingesetzten optischen Strahlengang analog zur Darstellung in Fig. 3.

Wie zuvor beschrieben, erlaubt die erste Ausführungsform der Mikroskopievorrichtung 12 beispielsweise Konfokalmikroskopie, sensitive Detektion einzelner Moleküle oder Partikel und Fluoreszenzkorrelationsspektroskopie (FCS).

Die zweite Ausführungsform der Mikroskopievorrichtung 12 ermöglicht beispielsweise eine Konfokalmikroskopie mit alternierender Laseranregung, Zweifarben-Fluoreszenzkorrelationsspektroskopie, Fluoreszenzspektroskopie zum Bestimmen von Faltungs- und/oder Aggregationsprozessen von Proteinen, zur Beobachtung von konformellen Zuständen sowie zur absoluten Abstandsmessung via Einzelmolekül-FRET.

In Fig. 6 ist eine (nicht anspruchsgemäße) dritte Ausführungsform der erfindungsgemäßen Mikroskopie-vorrichtung 12 gezeigt, die mittels des Baukastensystems 10 hergestellt ist, wobei eine perspektivische Ansicht von schräg vorne und eine um 180° um eine Längsachse L gedrehte weitere Ansicht dargestellt ist.

Es handelt sich insbesondere um ein Fluoreszenzmikroskop mit einer flächigen Kameradetektion, welche die Aufnahme von Bildern der Probe 46 erlaubt. Anwendungen dieser Ausführungsform können im Bereich der Fluoreszenzbildgebung, der Einzelmoleküldetektion oder der hochauflösenden Mikroskopie via STORM ("Stochastic Optical Reconstruction Microscopy"), PALM ("Photoactivated Localisation Microscopy") und PAINT ("Point Accumulation for Imaging in Nanoscale Topography") liegen.

Die dritte Ausführungsform entspricht im Wesentlichen den vorherigen Ausführungsformen, sodass im Folgenden lediglich auf Unterschiede eingegangen wird. Gleiche Bezugszeichen bezeichnen gleiche oder funktionsgleiche Bauteile und es wird auf die obigen Ausführungen verwiesen.

Die Mikroskopievorrichtung 12 der dritten Ausführungsform umfasst das Basismodul 14, das Detektionsmodul 16, das Anregungsmodul 22, die Adapterplatte 34, die Blende 37 und das Probenmodul 24, die jeweils aufeinander aufgesetzt und miteinander verbunden sind.

Die dritte Ausführungsform verfügt ebenfalls über ein separates Anregungsgehäuse 84 mit mehreren Anregungsquellen 50 wie für die zweite Ausführungsform beschrieben.

Die Anregungsoptik 51 verfügt in der dritten Ausführungsform neben dem reflektierenden Anregungskollimator 90 und dem ersten Anregungsspiegel 54 über eine dritte Anregungslinse 94, welche das Laserlicht 80 bündelt.

Dies hat zur Folge, dass das Laserlicht 80, nach Reflektion durch den Strahlteiler 58 innerhalb des Objektivs 60 fokussiert wird und nicht auf einem einzelnen Punkt der Probe, sodass ein die Probe 46 flächig vom Laserlicht 80 bestrahlt wird, insbesondere die gesamte Probe 46 (vgl. Fig. 6 und 7).

Die Detektionsoptik 62 der dritten Ausführungsform umfasst die erste Detektionslinse 92, die das Fluoreszenzlicht 82 bündelt, den dritten Detektionsspiegel 93 sowie einen vierten Detektionsspiegel 96, der das gebündelte Fluoreszenzlicht 82 zum Detektionselement 74 lenkt.

Das Detektionselement 74 ist in der dritten Ausführungsform eine Kamera, nämlich eine CMOS-Kamera, insbesondere eine sCMOS-Kamera, eine CCD Kamera oder eine emCCD-Kamera.

Grundsätzlich ist es auch denkbar, dass die Detektionsoptik 62 über mehr als ein Detektionselement 74 verfügt, beispielsweise über mehrere CMOS-Kameras. In diesem Fall ist analog zur Ausführungsform in Fig. 5 anstelle des vierten Detektionsspiegels 96 ein Detektorstrahlteiler 76 wie zuvor beschrieben vorgesehen. Durch den Einsatz mehrerer als Kamera ausgestalteter Detektionselemente 74 ist es möglich, simultan mehrfarbige Proben zu untersuchen, ohne, dass einzelne Farbkanäle für die Detektion gewählt werden müssen.

Fig. 7 zeigt schematisch die Funktionsweise der (nicht anspruchsgemäßen) Mikroskopievorrichtung 12 der dritten Ausführungsform in Bezug auf den in der Mikroskopievorrichtung 12 eingesetzten optischen Strahlengang analog zur Darstellung in den Fig. 3 und 5.

Die dritte Ausführungsform der Mikroskopievorrichtung 12 ermöglicht beispielsweise Weitfeldmikroskopie, insbesondere Weitfeldmikroskopie mit alternierender Laseranregung.

Anwendungen dieser Ausführungsform können im Bereich der Fluoreszenzbildgebung, der Einzelmoleküldetektion oder der hochauflösenden Mikroskopie via STORM, PALM und PAINT liegen.

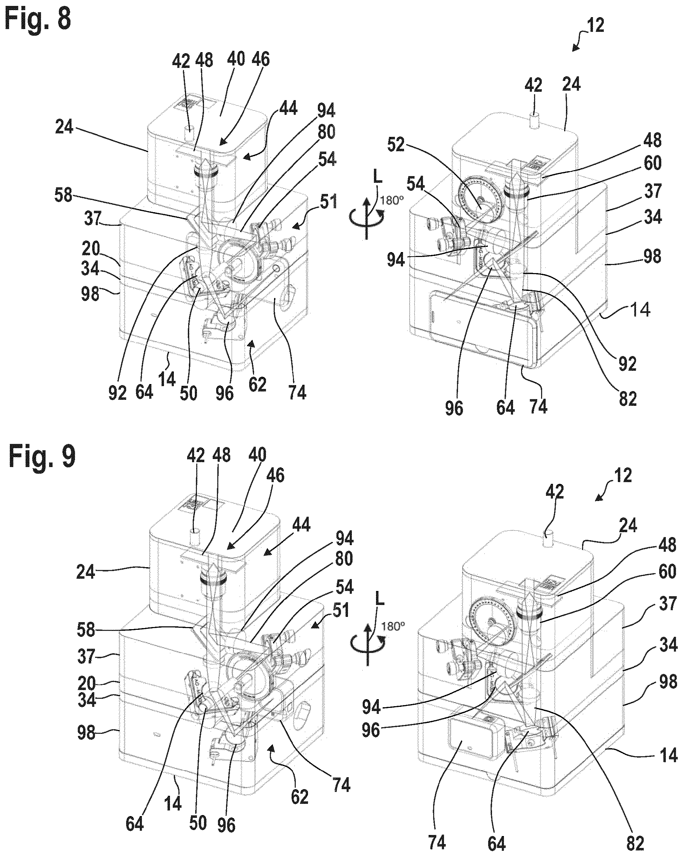

In Fig. 8 ist eine vierte (nicht anspruchsgemäße) Ausführungsform der Mikroskopievorrichtung 12 gezeigt, die mittels des Baukastensystems 10 hergestellt ist, wobei eine perspektivische Ansicht von schräg vorne und eine um 180° um eine Längsachse L gedrehte weitere Ansicht dargestellt ist.

Es handelt sich insbesondere um ein Fluoreszenzmikroskop mit einer flächigen Kameradetektion, welche die Aufnahme von Bildern der Probe 46 erlaubt.

Die vierte Ausführungsform entspricht im Wesentlichen den vorherigen Ausführungsformen, sodass im Folgenden lediglich auf Unterschiede eingegangen wird. Gleiche Bezugszeichen bezeichnen gleiche oder funktionsgleiche Bauteile und es wird auf die obigen Ausführungen verwiesen.

Die Mikroskopievorrichtung 12 der vierten Ausführungsform umfasst das Basismodul 14, ein Detektionsmodul 98, das Anregungsmodul 20, die Adapterplatte 34, die Blende 37 und das Probenmodul 24, die jeweils aufeinander aufgesetzt und miteinander verbunden sind.

Das Detektionsmodul 98 entspricht im Wesentlichen dem Detektionsmodul 16 (vgl. Fig. 6), wobei als Detektionselement 74 jedoch eine Kamera in Form eines Smartphones zum Einsatz kommt.

Die Anregungsoptik 51 der vierten Ausführungsform entspricht im Wesentlichen der Anregungsoptik 51 der ersten Ausführungsform, jedoch wird statt der zweiten Anregungslinse 56 die dritte Anregungslinse 94 verwendet, wie sie für die Anregungsoptik 51 der dritten Ausführungsform zuvor beschrieben wurde.

Die Detektionsoptik 62 ist analog zur Detektionsoptik der dritten Ausführungsform ausgebildet.

Fig. 9 zeigt eine fünfte (nicht anspruchsgemäße) Ausführungsform der Mikroskopievorrichtung 12, die mittels des Baukastensystems 10 hergestellt ist, wobei eine perspektivische Ansicht von schräg vorne und eine um 180° um eine Längsachse L gedrehte weitere Ansicht dargestellt ist.

Es handelt sich insbesondere um ein Fluoreszenzmikroskop mit einer flächigen Kameradetektion, welche die Aufnahme von Bildern der Probe 46 erlaubt.

Die fünfte Ausführungsform entspricht im Wesentlichen der vierten Ausführungsform, sodass im Folgenden lediglich auf Unterschiede eingegangen wird. Gleiche Bezugszeichen bezeichnen gleiche oder funktionsgleiche Bauteile und es wird auf die obigen Ausführungen verwiesen.

Die fünfte Ausführungsform unterscheidet sich lediglich dadurch von der vierten Ausführungsform (vgl. Fig. 8), dass anstelle einer Smartphone-Kamera eine Actionkamera als Detektionselement 74 eingesetzt wird.

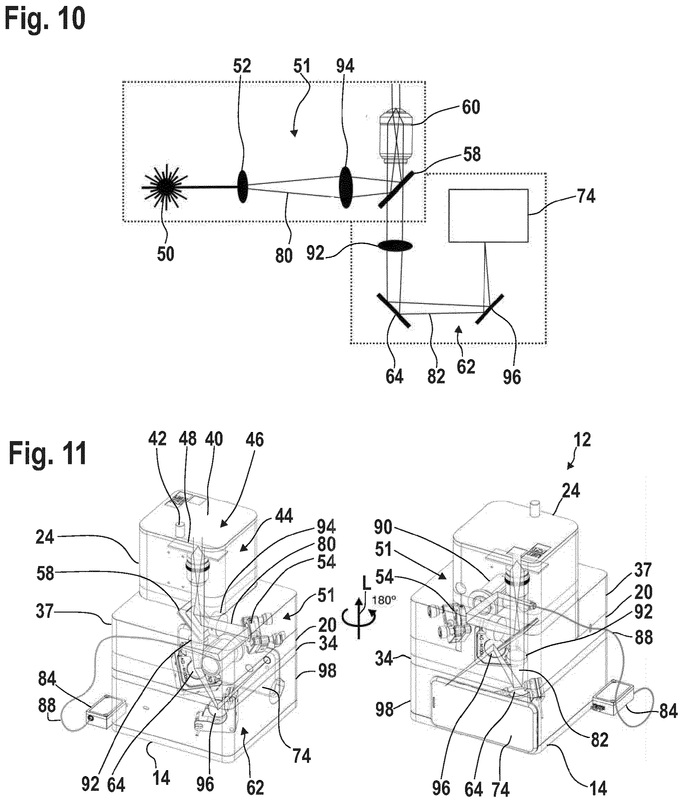

Fig. 10 zeigt schematisch die Funktionsweise der (nicht anspruchsgemäßen) vierten und fünften Ausführungsform der Mikroskopievorrichtung 12 in Bezug auf den in der Mikroskopievorrichtung 12 eingesetzten optischen Strahlengang analog zur Darstellung in den Fig. 3, 5 und 7.

Die vierte und fünfte Ausführungsform der Mikroskopievorrichtung 12 ermöglichen beispielsweise Weitfeldmikroskopie, insbesondere Weitfeldvideomikroskopie.

Anwendungen dieser Ausführungsform können im Bereich der Fluoreszenzbildgebung, der Einzelmoleküldetektion oder der hochauflösenden Mikroskopie via STORM, PALM und PAINT liegen.

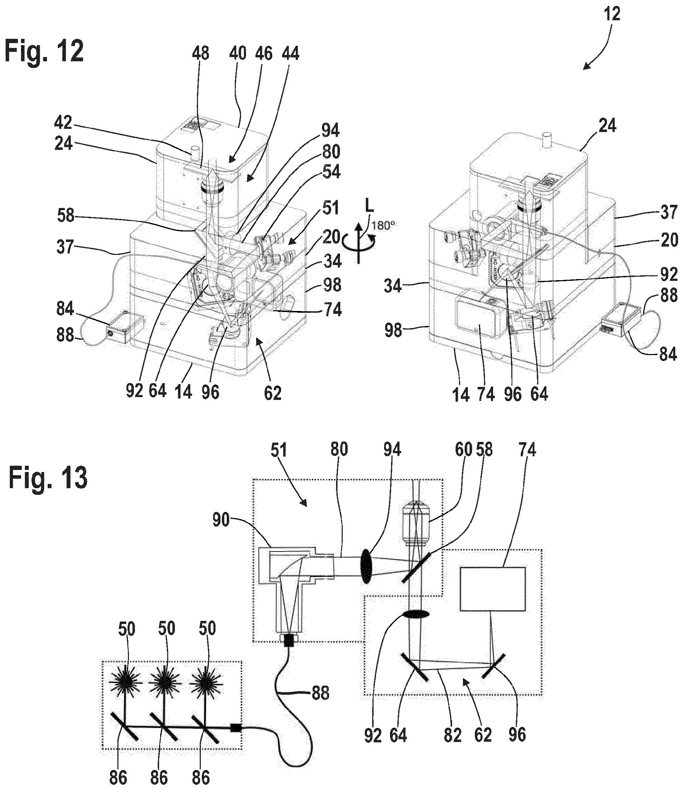

Die Fig. 11 und 12 zeigen eine sechste bzw. eine siebte (nicht anspruchsgemäße) Ausführungsform der Mikroskopievorrichtung 12, die mittels des Baukasten-systems 10 hergestellt sind, wobei jeweils eine perspektivische Ansicht von schräg vorne und eine um 180° um eine Längsachse L gedrehte weitere Ansicht dargestellt ist.

Es handelt sich insbesondere um ein Fluoreszenzmikroskop mit einer flächigen Kameradetektion, welche die Aufnahme von Bildern der Probe erlaubt, die hier mit einer Variation der Laseranregung ausgeführt ist.

Die sechste und siebte Ausführungsform entspricht im Wesentlichen der vierten bzw. fünften Ausführungsform, wobei sich diese lediglich darin unterscheiden, dass anstelle des Anregungsmoduls 20 das Anregungsmodul 22 zum Einsatz kommt und das Anregungsmodul 22 zusätzlich das separate Anregungsgehäuse 84 mit mehreren Anregungsquellen 50 umfasst, wie zuvor bereits für die dritte Ausführungsform beschrieben.

Die sechste und siebte Ausführungsform der Mikroskopievorrichtung 12 ermöglichen daher beispielsweise eine Weitfeldmikroskopie mit alternierender Laseranregung, insbesondere eine Weitfeldvideomikroskopie mit alternierender Laseranregung.

Die Funktionsweise der (nicht anspruchsgemäßen) sechsten und siebenten Ausführungsform ist schematisch in Fig. 13 dargestellt in Bezug auf den in der Mikroskopievorrichtung 12 eingesetzten optischen Strahlengang analog zu den Fig. 3, 5, 7 und 10.

Somit zeichnet sich das erfindungsgemäße Baukastensystem 10 (vgl. Fig. 1) durch eine hohe Variabilität und Flexibilität hinsichtlich der mittels des Baukastensystems 10 hergestellten Mikroskopievorrichtungen 12 auf.

Die Flexibilität der erfindungsgemäßen Ausgestaltung bzw. des erfindungsgemäßen Ansatzes zeigt sich beispielsweise darin, dass alle Teile der zuvor beispielhaft beschriebenen bzw. ausgewählten Mikroskopievorrichtungen 12 austauschbar sind.

Entsprechend ist es beispielsweise möglich, dass die Mikroskopievorrichtung 12 der ersten Ausführungsform gemäß Fig. 2 auf eine Anregung wie in der Mikroskopievorrichtung der zweiten Ausführungsform gemäß Fig. 4 innerhalb kürzester Zeit umgestellt bzw. umgerüstet wird. Dies gilt analog für alle weiteren Kombinationen, die sich aus den zuvor beschriebenen Ausführungsformen ergeben.

## Patentansprüche

1. Baukastensystem für eine Mikroskopievorrichtung (12), die ein Basismodul (14), ein auf das Basismodul (14) aufgesetztes Detektionsmodul (16, 18, 98) zum Detektieren einer angeregten Fluoreszenz, ein auf das Detektionsmodul (16, 18, 98) aufgesetztes Anregungsmodul (20, 22) zum Erzeugen der Fluoreszenz in einer Probe (46) und ein auf das Anregungsmodul (20, 22) aufgesetztes Probenmodul (24), welches dazu ausgelegt ist, die Probe (46) aufzunehmen, umfasst, **dadurch gekennzeichnet, dass**
das Baukastensystem (10) zumindest ein Basismodul (14) sowie zumindest ein Probenmodul (24) umfasst,
wobei das Baukastensystem (10) mehrere Anregungsmodule (20, 22) umfasst, wobei die mehreren Anregungsmodule (20, 22) eine unterschiedliche Art und/oder Anzahl an Anregungsquellen (50) sowie eine Anregungsoptik (51) aufweisen,
wobei das Baukastensystem (10) mehrere Detektionsmodule (16, 18, 98) umfasst, wobei die mehreren Detektionsmodule (16, 18, 98) eine unterschiedliche Art und/oder Anzahl an Detektionselementen (74) sowie eine Detektionsoptik (62) aufweisen,
wobei die Detektionsmodule (16, 18, 98) und die Anregungsmodule (20, 22) des Baukastensystems (10) jeweils einheitliche Verbindungsschnittstellen (26, 28) besitzen, um jedes der Anregungsmodule (20, 22) mit jedem der Detektionsmodule (16, 18, 98) miteinander verbinden zu können,
wobei durch eine jeweilige Kombination aus einem der mehreren Anregungsmodule (20, 22) und einem der mehreren Detektionsmodule (16, 18, 98) ein Betriebsmodus der Mikroskopievorrichtung (12) vorgebbar ist, und wobei der Betriebsmodus angibt, welche Art von Fluoreszenzmikroskopie oder Fluoreszenzspektroskopie mittels der Mikroskopievorrichtung (12) durchführbar ist,
wobei wenigstens in einem der mehreren Detektionsmodule (16, 18, 98) das Detektionselement (74) bzw. die Detektionselemente (74) in einem separaten Detektionsgehäuse (72) angeordnet, mittels einer ersten optischen Faser (73) mit der Detektionsoptik (62) verbunden und ein Photomultiplier und/oder eine Avalanche-Photodiode ist bzw. sind;
wobei wenigstens eines der mehreren Detektionsmodule (16, 18, 98) einen ersten Detektionsspiegel (64), einen zweiten Detektionsspiegel (68) und einen reflektierenden Detektionskollimator (68) umfasst,
wobei der erste Detektionsspiegel (64) und der zweite Detektionsspiegel (68) dazu eingerichtet sind, von der Probe (46) ausgesandtes Fluoreszenzlicht (82) zum reflektierenden Detektionskollimator (68) zu leiten,
wobei der reflektierende Detektionskollimator (68) dazu eingerichtet ist, den Strahlquerschnitt des Fluoreszenzlichts (82) auf einen Durchmesser gleich oder kleiner der ersten optischen Faser (73) zu reduzieren, und
wobei die Mikroskopievorrichtung (12) ein Konfokalmikroskop ist.

2. Baukastensystem nach Anspruch 1, wobei das Basismodul (14) und/oder ein Gehäuse des Detektionsmoduls (16, 18, 98), ein Gehäuse des Anregungsmoduls (20, 22) und/oder ein Gehäuse des Probenmoduls (24) mittels eines additiven Verfahrens hergestellt sind bzw. ist, insbesondere mittels 3D-Druck.

3. Baukastensystem nach Anspruch 1 oder 2, wobei die Anregungsquelle (50) bzw. die Anregungsquellen (50) eine einzelne Laserquelle oder eine Vielzahl von Laserquellen ist bzw. sind.

4. Baukastensystem nach einem der vorhergehenden Ansprüche, wobei die Anregungsquelle (50) bzw. die Anregungsquellen (50) in einem separaten Anregungsgehäuse (84) angeordnet und mittels einer zweiten optischen Faser (88) mit der Anregungsoptik (51) verbunden sind.

5. Baukastensystem nach einem der vorhergehenden Ansprüche, wobei das Basismodul (14), das jeweilige, zum Ausbilden der Mikroskopievorrichtung (12) ausgewählte Detektionsmodul (16, 18, 98), das jeweilige, zum Ausbilden der Mikroskopievorrichtung (12) ausgewählte Anregungsmodul (20, 22) und das Probenmodul (24) jeweils werkzeugfrei miteinander verbindbar sind.

6. Baukastensystem nach einem der vorhergehenden Ansprüche, wobei das Basismodul (14), das Detektionsmodul (16, 18, 98), das Anregungsmodul (20, 22) und/oder das Probenmodul (24) zerstörungsfrei lösbar aufgesetzt sind.

7. Baukastensystem nach einem der vorhergehenden Ansprüche, wobei die Anregungsmodule (20, 22) und/oder die Detektionsmodule (16, 18, 98) des Baukastensystems (10) automatisch justierende Anregungsmodule (20, 22) und/oder Detektionsmodule (16, 18, 98) sind.

8. Mikroskopievorrichtung zum Beobachten von in einer Probe (46) angeregter Fluoreszenz, **dadurch gekennzeichnet, dass** die Mikroskopievorrichtung (12) mittels des Baukastensystems (10) nach einem der vorhergehenden Ansprüche hergestellt und ein Konfokalmikroskop ist,
wobei die Mikroskopievorrichtung (12) ein Detektionsmodul (16) mit in einem separaten Detektionsgehäuse (72) angeordnetem Detektionselement (74) bzw. angeordneten Detektionselementen (74) aufweist, das bzw. die mittels der ersten optischen Faser (73) mit der Detektionsoptik (62) verbunden und ein Photomultiplier und/oder eine Avalanche-Photodiode ist bzw. sind,
wobei das Detektionsmodul (16) den ersten Detektionsspiegel (64), den zweiten Detektionsspiegel (68) und den reflektierenden Detektionskollimator (68) umfasst, wobei der erste Detektionsspiegel (64) und der zweite Detektionsspiegel (68) dazu eingerichtet sind, von der Probe (46) ausgesandtes Fluoreszenzlicht (82) zum reflektierenden Detektionskollimator (68) zu leiten, und wobei der reflektierende Detektionskollimator (68) dazu eingerichtet ist, den Strahlquerschnitt des Fluoreszenzlichts (82) auf einen Durchmesser gleich oder kleiner der ersten optischen Faser (73) zu reduzieren.

9. Mikroskopievorrichtung nach Anspruch 8, wobei die Mikroskopievorrichtung (12) aus dem Basismodul (14), dem Detektionsmodul (16), dem Anregungsmodul (20, 22), dem Probenmodul (24) und optional einer Adapterplatte (34) und/oder einer Blende (37) besteht.

10. Verfahren zum Herstellen einer Mikroskopievorrichtung (12) gemäß Anspruch 8 oder 9 basierend auf einem Baukastensystem (10) nach einem der Ansprüche 1 bis 7, mit den folgenden Schritten:
- Auswählen eines Detektionsmoduls (16) aus den mehreren Detektionsmodulen (16, 18, 98), die eine unterschiedliche Art und/oder Anzahl an Detektionselementen (74) sowie eine Detektionsoptik (62) aufweisen,
- Verbinden des ausgewählten Detektionsmoduls (16) mit einem Basismodul (14),
- Auswählen eines Anregungsmoduls (20, 22) aus den mehreren Anregungsmodulen (20, 22), die eine unterschiedliche Art und/oder Anzahl an Anregungsquellen (50) sowie eine Anregungsoptik (51) aufweisen,
- Verbinden des ausgewählten Anregungsmoduls (20, 22) mit dem ausgewählten Detektionsmodul (16, 18, 98), und
- Verbinden eines Probenmoduls (24) mit dem ausgewählten Anregungsmodul (20, 22).

## Claims

1. A modular system for a microscopy device (12) which comprises a base module (14), a detection module (16, 18, 98) placed on the base module (14) for detecting an excited fluorescence, an excitation module (20, 22) placed on the detection module (16, 18, 98) for generating fluorescence in a sample (46), and a sample module (24) that is placed on the excitation module (20, 22) and is designed to receive the sample (46), **characterized in that**
the modular system (10) comprises at least one base module (14) and at least one sample module (24),
wherein the modular system (10) comprises a plurality of excitation modules (20, 22), the plurality of excitation modules (20, 22) having different types and/or numbers of excitation sources (50) as well as an excitation optics (51),
wherein the modular system (10) comprises a plurality of detection modules (16, 18, 98), the plurality of detection modules (16, 18, 98) having different types and/or numbers of detection elements (74) as well as a detection optics (62),
wherein the detection modules (16, 18, 98) and the excitation modules (20, 22) of the modular system (10) each have uniform connection interfaces (26, 28) to allow any of the excitation modules (20, 22) to be connected to any of the detection modules (16, 18, 98),
wherein an operating mode of the microscopy device (12) is specifiable by a respective combination of one of the plurality of excitation modules (20, 22) and one of the plurality of detection modules (16, 18, 98), and wherein the operating mode indicates which type of fluorescence microscopy or fluorescence spectroscopy can be performed by means of the microscopy device (12),
wherein at least in one of the plurality of detection modules (16, 18, 98), the detection element (74) or elements (74) is or are arranged in a separate detection housing (72), connected to the detection optics (62) by means of a first optical fiber (73), and is or are a photomultiplier and/or an avalanche photodiode;
wherein at least one of the plurality of detection modules (16, 18, 98) comprises a first detection mirror (64), a second detection mirror (68), and a reflective detection collimator (68),
wherein the first detection mirror (64) and the second detection mirror (68) are configured to direct fluorescence light (82) emitted by the sample (46) to the reflective detection collimator (68),
wherein the reflective detection collimator (68) is configured to reduce the beam cross-section of the fluorescence light (82) to a diameter equal to or smaller than that of the first optical fiber (73), and
wherein the microscopy device (12) is a confocal microscope.

2. The modular system according to claim 1, wherein the base module (14) and/or a housing of the detection module (16, 18, 98), a housing of the excitation module (20, 22) and/or a housing of the sample module (24) is or are manufactured by means of an additive process, in particular by means of 3D printing.

3. The modular system according to claim 1 or 2, wherein the excitation source (50) or sources (50) is or are a single laser source or a multitude of laser sources.

4. The modular system according to any one of the preceding claims, wherein the excitation source (50) or sources (50) is or are arranged in a separate excitation housing (84) and connected to the excitation optics (51) by means of a second optical fiber (88).

5. The modular system according to any one of the preceding claims, wherein the base module (14), the respective detection module (16, 18, 98) selected to form the microscopy device (12), the respective excitation module (20, 22) selected to form the microscopy device (12), and the sample module (24) are each connectable to one another without a tool.

6. The modular system according to any one of the preceding claims, wherein the base module (14), the detection module (16, 18, 98), the excitation module (20, 22) and/or the sample module (24) are mounted so as to be non-destructively detachable.

7. The modular system according to any one of the preceding claims, wherein the excitation modules (20, 22) and/or the detection modules (16, 18, 98) of the modular system (10) are automatically adjusting excitation modules (20, 22) and/or detection modules (16, 18, 98).

8. A microscopy device for observing fluorescence excited in a sample (46), **characterized in that** the microscopy device (12) is manufactured by means of the modular system (10) according to any one of the preceding claims and is a confocal microscope,
wherein the microscopy device (12) includes a detection module (16) having a detection element (74) or elements (74) which is or are arranged in a separate detection housing (72) and is or are connected to the detection optics (62) by means of the first optical fiber (73) and is or are a photomultiplier and/or an avalanche photodiode,
wherein the detection module (16) comprises the first detection mirror (64), the second detection mirror (68), and the reflective detection collimator (68), wherein the first detection mirror (64) and the second detection mirror (68) are configured to direct fluorescence light (82) emitted by the sample (46) to the reflective detection collimator (68), and wherein the reflective detection collimator (68) is configured to reduce the beam cross-section of the fluorescence light (82) to a diameter equal to or smaller than that of the first optical fiber (73).

9. The microscopy device according to claim 8, wherein the microscopy device (12) consists of the base module (14), the detection module (16), the excitation module (20, 22), the sample module (24) and, optionally, an adapter plate (34) and/or a shield (37).

10. A method of manufacturing a microscopy device (12) according to claim 8 or 9 based on a modular system (10) according to any one of claims 1 to 7, comprising the following steps:
- selecting a detection module (16) from the plurality of detection modules (16, 18, 98), which have different types and/or numbers of detection elements (74) as well as a detection optics (62);
- connecting the selected detection module (16) to a base module (14);
- selecting an excitation module (20, 22) from the plurality of excitation modules (20, 22), which have different types and/or numbers of excitation sources (50) as well as an excitation optics (51);
- connecting the selected excitation module (20, 22) to the selected detection module (16, 18, 98); and
- connecting a sample module (24) to the selected excitation module (20, 22).

## Revendications

1. Système modulaire pour un dispositif de microscopie (12), comprenant un module de base (14), un module de détection (16, 18, 98) monté sur le module de base (14) pour détecter une fluorescence excitée, un module d'excitation (20, 22) monté sur le module de détection (16, 18, 98) pour générer la fluorescence dans un échantillon (46), et un module d'échantillon (24) monté sur le module d'excitation (20, 22) et réalisé de manière à recevoir l'échantillon (46), **caractérisé en ce que**
le système modulaire (10) comprend au moins un module de base (14) ainsi qu'au moins un module d'échantillon (24),
le système modulaire (10) comprenant plusieurs modules d'excitation (20, 22), lesdits plusieurs modules d'excitation (20, 22) présentant un type et/ou un nombre différent de sources d'excitation (50) ainsi qu'une optique d'excitation (51),
le système modulaire (10) comprenant plusieurs modules de détection (16, 18, 98), lesdits plusieurs modules de détection (16, 18, 98) présentant un type et/ou un nombre différent d'éléments de détection (74) ainsi qu'une optique de détection (62),
les modules de détection (16, 18, 98) et les modules d'excitation (20, 22) du système modulaire (10) présentant chacun des interfaces de raccordement uniformes (26, 28) pour pouvoir raccorder chacun des modules d'excitation (20, 22) à chacun des modules de détection (16, 18, 98),
une combinaison respective de l'un des plusieurs modules d'excitation (20, 22) et de l'un des plusieurs modules de détection (16, 18, 98) permettant de prédéfinir un mode de fonctionnement du dispositif de microscopie (12), et le mode de fonctionnement indiquant quel type de microscopie à fluorescence ou de spectroscopie à fluorescence peut être réalisé au moyen du dispositif de microscopie (12),
l'élément de détection (74) ou les éléments de détection (74), dans au moins l'un des plusieurs modules de détection (16, 18, 98), étant agencé(s) dans un boîtier de détection séparé (72), relié(s) à l'optique de détection (62) au moyen d'une première fibre optique (73), et constituant un photomultiplicateur et/ou une photodiode à avalanche,
au moins l'un des plusieurs modules de détection (16, 18, 98) comprenant un premier miroir de détection (64), un deuxième miroir de détection (68) et un collimateur de détection réfléchissant (68),
le premier miroir de détection (64) et le deuxième miroir de détection (68) étant aménagés de manière à diriger de la lumière fluorescente (82) émise par l'échantillon (46) vers le collimateur de détection réfléchissant (68),
le collimateur de détection réfléchissant (68) étant aménagé de manière à réduire la section transversale du faisceau de la lumière fluorescente (82) à un diamètre égal ou inférieur à celui de la première fibre optique (73), et
le dispositif de microscopie (12) étant un microscope confocal.

2. Système modulaire selon la revendication 1, le module de base (14) et/ou un boîtier du module de détection (16, 18, 98), un boîtier du module d'excitation (20, 22) et/ou un boîtier du module d'échantillon (24) étant fabriqué(s) par un procédé additif, en particulier par impression 3D.

3. Système modulaire selon la revendication 1 ou 2, la source d'excitation (50) ou les sources d'excitation (50) étant une source laser unique ou une pluralité de sources laser.

4. Système modulaire selon l'une des revendications précédentes, la source d'excitation (50) ou les sources d'excitation (50) étant agencée(s) dans un boîtier d'excitation séparé (84) et raccordée(s) à l'optique d'excitation (51) au moyen d'une deuxième fibre optique (88).

5. Système modulaire selon l'une des revendications précédentes, le module de base (14), le module de détection (16, 18, 98) respectif choisi pour former le dispositif de microscopie (12), le module d'excitation (20, 22) respectif choisi pour former le dispositif de microscopie (12), et le module d'échantillon (24) étant respectivement apte à être reliés les uns aux autres sans outil.

6. Système modulaire selon l'une des revendications précédentes, le module de base (14), le module de détection (16, 18, 98), le module d'excitation (20, 22) et/ou le module d'échantillon (24) étant montés séparables de manière non destructive.

7. Système modulaire selon l'une des revendications précédentes, les modules d'excitation (20, 22) et/ou les modules de détection (16, 18, 98) du système modulaire (10) étant des modules d'excitation (20, 22) et/ou des modules de détection (16, 18, 98) à réglage automatique.

8. Dispositif de microscopie pour l'observation de fluorescence excitée dans un échantillon (46), **caractérisé en ce que** le dispositif de microscopie (12) est fabriqué au moyen du système modulaire (10) selon l'une des revendications précédentes et est un microscope confocal,
le dispositif de microscopie (12) comportant un module de détection (16) qui présente un élément de détection (74) ou des éléments de détection (74) agencé(s) dans un boîtier de détection séparé (72), relié(s) à l'optique de détection (62) au moyen de la première fibre optique (73), et étant un photomultiplicateur et/ou une photodiode à avalanche,
le module de détection (16) comprenant le premier miroir de détection (64), le deuxième miroir de détection (68) et le collimateur de détection réfléchissant (68), le premier miroir de détection (64) et le deuxième miroir de détection (68) étant aménagés de manière à diriger de la lumière fluorescente (82) émise par l'échantillon (46) vers le collimateur de détection réfléchissant (68), et le collimateur de détection réfléchissant (68) étant aménagé de manière à réduire la section transversale du faisceau de la lumière fluorescente (82) à un diamètre égal ou inférieur à celui de la première fibre optique (73).

9. Dispositif de microscopie selon la revendication 8, le dispositif de microscopie (12) se composant du module de base (14), du module de détection (16), du module d'excitation (20, 22), du module d'échantillon (24) et, facultativement, d'une plaque d'adaptation (34) et/ou d'un diaphragme (37).

10. Procédé de fabrication d'un dispositif de microscopie (12) selon la revendication 8 ou 9, basé sur un système modulaire (10) selon l'une des revendications 1 à 7, comprenant les étapes suivantes :
- le choix d'un module de détection (16) parmi les plusieurs modules de détection (16, 18, 98) qui présentent un type et/ou un nombre différent d'éléments de détection (74) ainsi qu'une optique de détection (62),
- le raccordement du module de détection choisi (16) à un module de base (14),
- le choix d'un module d'excitation (20, 22) parmi les plusieurs modules d'excitation (20, 22) qui présentent un type et/ou un nombre différent de sources d'excitation (50) ainsi qu'une optique d'excitation (51),
- le raccordement du module d'excitation choisi (20, 22) au module de détection choisi (16, 18, 98), et
- le raccordement d'un module d'échantillon (24) au module d'excitation sélectionné (20, 22).
